# EUROPEAN PATENT APPLICATION

(11) **EP 4 525 451 A1**
(43) Date of publication of application: **19.03.2025**
(21) Application number: 23888110.6
(22) Date of filing: 10.11.2023
(51) Int. Cl.: H04N 21/2187

(54) **LIVE STREAMING RESERVATION METHOD AND APPARATUS, DEVICE, AND STORAGE MEDIUM**

(30) Priority: 10.11.2022 CN 202211408433
(71) Applicant: Beijing Zitiao Network Technology Co., Ltd., Beijing 100190 (CN)
(72) Inventor: LI, Yijie, Beijing 100028 (CN)
(74) Representative: Grünecker Patent- und Rechtsanwälte PartG mbB
(86) International application number: PCT/CN2023/130943
(87) International publication number: WO 2024/099425

(57) **Abstract**

The embodiment of the disclosure provides a method, apparatus, device, and computer-readable storage medium for live stream reservation. The method includes: presenting a first interface element associated with a reservation of a live stream in an application, the first interface element comprising at least first information about the live stream; and in response to receiving a predetermined operation for the first interface element, triggering the reservation for the live stream; and triggering a presentation of a second interface element comprising at least second information about the live stream, the second interface element being enabled to be shared via the application. According to the method provided by the embodiments of the disclosure, the internal and external sharing promotion capability of a live stream content may be improved, and a more convenient and diversified live streaming information sharing way may be provided for the user.

## Description

This application claims the benefit of Chinese Patent Application No. 202211408433.1, entitled 'METHOD, APPARATUS, DEVICE AND STORAGE MEDIUM FOR LIVE STREAM RESERVATION,' filed on Nov. 10, 2022, the entire content of which is incorporated herein by reference.

### FIELD

Example embodiments of the present disclosure generally relate to the field of computers, and in particular, to a method, apparatus, device, and computer-readable storage medium for live stream reservation.

### BACKGROUND

With the development of computer technologies, various live streams may provide people with contents such as information, education and entertainment. More and more applications may also provide live stream content. A provider of the live stream content may set a start time of the live stream and present a sticker with a content such as the start time of the live stream at a predetermined location of the application. The user may reserve the live stream by clicking the sticker.

### SUMMARY

In a first aspect of the present disclosure, a method for live stream reservation is provided. The method includes: presenting a first interface element associated with a reservation of a live stream in an application, the first interface element including at least first information about the live stream; and in response to receiving a predetermined operation for the first interface element, triggering the reservation for the live stream; and triggering a presentation of a second interface element including at least second information about the live stream, the second interface element being enabled to be shared via the application.

In a second aspect of the present disclosure, an apparatus for live stream reservation is provided. The apparatus includes: a presenting module configured to present a first interface element associated with a reservation of a live stream in an application, the first interface element including at least first information about the live stream; and a triggering module configured to, in response to receiving a predetermined operation for the first interface element, trigger the reservation for the live stream; and trigger a presentation of a second interface element including at least second information about the live stream, the second interface element being enabled to be shared via the application.

In a third aspect of the present disclosure, an electronic device is provided. The apparatus includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer readable storage medium having a computer program stored thereon is provided, the computer program, when executed by a processor, implementing the method of the first aspect.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIG. 2 illustrates a flowchart of a process for live stream reservation according to some embodiments of the present disclosure;
FIG. 3A to FIG. 3I illustrate schematic diagrams of example pages related to a live stream reservation according to some embodiments of the present disclosure;
FIG. 4 illustrates a block diagram of an apparatus for live stream reservation according to some embodiments of the present disclosure; and
FIG. 5 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein. Rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms 'including', and the like should be understood to include 'including but not limited to'. The term 'based on' should be understood as 'based at least in part on'. The terms 'one embodiment' or 'the embodiment' should be understood as 'at least one embodiment'. The term 'some embodiments' should be understood as 'at least some embodiments'. Other explicit and implicit definitions may also be included below.

Herein, unless explicitly stated, 'in response to A' performs one step and does not imply that this step is performed immediately after 'A' but may include one or more intermediate steps.

It may be understood that the data involved in the technical solution (including but not limited to the data itself, the obtaining or use of the data) should follow the requirements of the corresponding laws and regulations and related regulations.

It may be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the creation of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select 'agree' or 'disagree' to provide personal information to the electronic device.

It may be understood that the foregoing notification and obtaining a user creation process are merely illustrative, and do not constitute a limitation on implementations of the present disclosure, and other manners of meeting related laws and regulations may also be applied to implementations of the present disclosure.

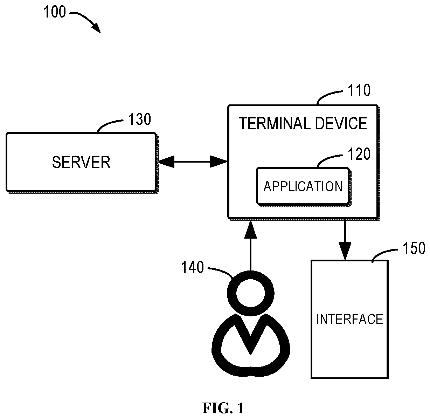

FIG. 1 illustrates a schematic diagram of an example environment 100 in which embodiments of the present disclosure may be implemented. In the example environment 100, an application 120 is installed in a terminal device 110. A user 140 may interact with the application 120 via the terminal device 110 and/or an attachment device of the terminal device 110. In some examples, the application 120 may be a social application, such as a content sharing application. The application 120 may provide the user 140 with one or more services related to the media content item, including creating, posting, browsing, commenting, reposting, etc. of the media content item. Herein, a 'media content item' includes one or more types of content, such as an image, image set, video, animated image, audio, text, and the like.

In environment 100 of FIG. 1, the terminal device 110 may present a page 150 of the application 120 if the application 120 is active. The page 150 may include various pages that may be provided by the application 120, such as a personal homepage, a details page of the media content, a content creating page, a content posting page, a message page, and so forth. The application 120 may provide content creation functions, including capturing, uploading, editing, and/or posting a media content item including a live stream content.

In some embodiments, the terminal device 110 communicates with the server 130 to implement provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a 'wearable' circuit, etc. ). The server 130 may be various types of computing systems/servers capable of providing computing power, including, but not limited to, mainframes, edge computing nodes, computing devices in a cloud environment, and the like.

**It** should be understood that the structures and functions of the various elements in the environment 100 are described for example purposes only and do not imply any limitation to the scope of the present disclosure.

In some applications, users are allowed to post live stream content. The poster (also known as the live stream host or live stream user) who is going to post the live stream content is able to preview a start time of the live stream within the application before the live stream content starts. In a particular content presenting page of an application, such as in a personal homepage or a media content presenting page of a poster, an interface element, such as a sticker or the like, associated with a preview of the live stream is presented. The user browsing a corresponding page may reserve the live stream by clicking the interface element.

In a current application, the interface elements for providing information of the live stream reservation usually have a uniform format, and cannot be customized, which may result in a lack of brand transparent or emotional expression for some live stream contents (for example, a live stream of a large event/activity), which is not conducive to differentiated operation and experience upgrade of the live stream content. In addition, when the user makes a reservation on the live stream content by clicking the interface element that provides the live stream reservation information, a successful reservation will only pop up a pop-up window indicating that the reservation is successful and does not have other operations on the live stream reservation information, such as sharing, which is not conducive to the promotion of the live stream content as well as the application.

According to an embodiment of the present disclosure, a method for live stream reservation is provided. According to the method according to embodiments of the present disclosure, it is possible to present reservation information using an interface element (also referred to as a first interface element) with different visual patterns customized by an initiator of the live stream, thereby contributing to the improvement of the differentiated operation of the live stream and the upgrading of the experience. In addition, after the user performs a reservation operation such as clicking on the first interface element, the user may trigger a reservation for the live stream and at the same time trigger a presentation of a second interface element including second information about the reservation, and the second interface element may be shared via the application. Meanwhile, the user can also share the second interface element. As a result, it is possible to implement one-click triggering of the live stream reservation and presentation of additional shareable information, shorten the user interaction path, enable the user to complete the reservation and at the same time quickly and conveniently share the live stream, and improve the sharing efficiency. This not only improves the various sharing and promotion capabilities of live stream content, but also provides users with more convenient and diverse ways to share live stream information.

Some example embodiments of the present disclosure will be described below with continued reference to the accompanying drawings.

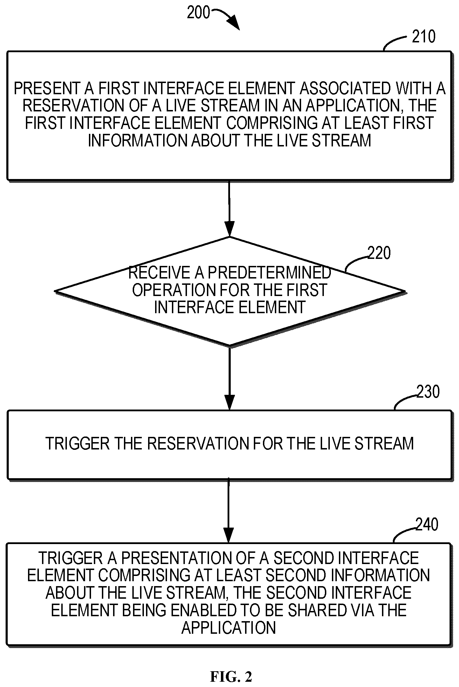

**FIG.** 2 shows a flowchart of a process 200 for content presentation according to some embodiments of the present disclosure. The process 200 may be implemented at the terminal device 110. For ease of discussion, the process 200 will be described with reference to the environment 100 of FIG. 1.

At block 210, the terminal device 110 presents a first interface element associated with a reservation of a live stream in an application, the first interface element including at least first information about the live stream.

In some embodiments, the first information included in the first interface element may include basic information about the live stream, such as the date and time of the live stream. In some embodiments, personalized customization of the first interface element is supported to present a personalized visual pattern. The personalized visual pattern may include, for example, a title or a brief description about the live stream content, including a sticker or button having a predetermined size or shape, etc., as will be further described below. The first interface element may be presented in any page of the application, so long as such a page may be configured to present reservation related information for the live stream. Examples of such pages may include a content presenting page of an application, such as a content recommending page, a live streaming information aggregation presenting page, or the like.

Next, the terminal device 110 detects whether the user performs a predetermined operation on the first interface element, and determines, at block 220, whether a predetermined operation for the first interface element is received. In response to receiving the predetermined operation on the first interface element, the terminal device 110 triggers a reservation for the live stream at block 230 and triggers a presentation of the second interface element at block 240. Note that while blocks 230 and 240 are shown in sequence in FIG. 2, it should be understood that these two operations may be performed in any order. Triggering a reservation for a live stream indicates that the current user has reserved this live stream. In this way, in some applications, a live stream reminder will be sent to the user in a manner specified by the user within a predetermined time at or before a start of the live stream. The presented second interface element includes at least second information about the live stream and supports sharing via the current application. For example, it may be shared within or out of the application. In this way, the promotion and experience of using the live stream content as well as the application is thereby facilitated.

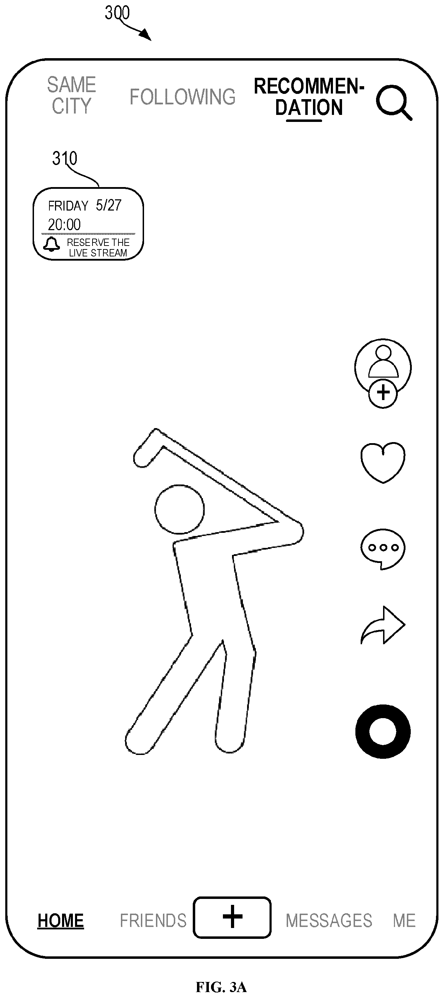

Hereinafter, a manner of live stream reservation of the present disclosure will be described in more detail with reference to some examples. As an example, FIG. 3A illustrates an example content presenting page 300 of an application. In the example shown in FIG. 3A, a media content sharing page of a live stream owner is presented, and the live stream owner will be live streaming on a Friday night of May 27 at 20:00, and he or she has previewed the live stream in the application and selected a default sticker pattern interface element 310 (i.e., the first interface element mentioned in the preceding section). As shown in the example content presenting page 300 shown in FIG. 3A, a first interface element 310 is presented on the presented media content sharing page. The user browsing the media content sharing page may reserve the live stream content of the live stream by clicking the first interface element 310.

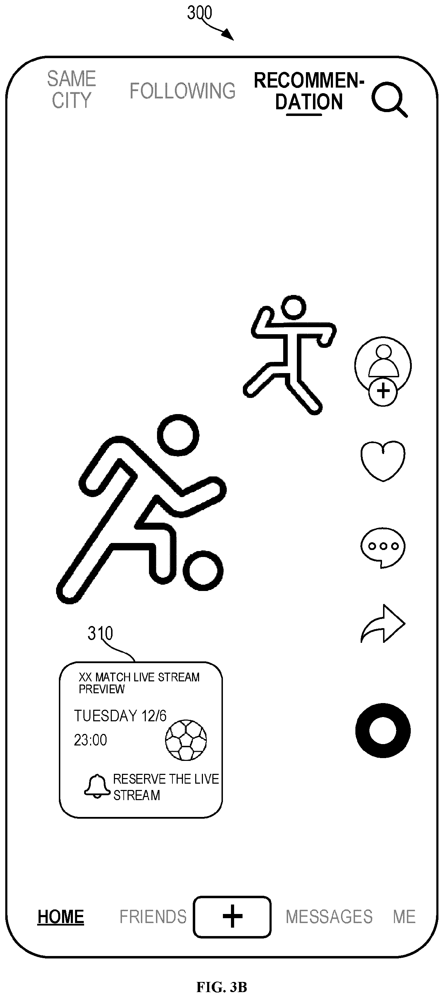

The first interface element 310 may include first information about the live stream. The first information may be configured as required. In some embodiments, the first information may include summary information about the live stream. In some embodiments, a visual pattern of the first interface element 310 may be customized by an initiator of the live stream or the live stream owner according to the live stream content. For example, in the case where the live stream is of a certain large-scale soccer match, the visual pattern of the first interface element 310 may be customized to include elements related to the large-scale soccer match, such as including, but not limited to, a soccer pattern, a team flag of the team involved in the live stream, a team logo, a representative color or graphic, and the like. For example, in FIG. 3B, when the previewed live stream is a soccer match, the visual pattern of the first interface element 310 may be in the form of a sticker with a certain size (hereinafter referred to as a first size), and includes a soccer pattern, and displays a brief description of 'XX match live stream preview'.

In some embodiments, the background color or pattern of the first interface element 310 may be customized to display a team flag, a team logo, or a logo color of the participating sides of the live stream being previewed. If the live stream content being previewed is a concert of a certain star, the first interface element 310 may present the live stream preview with a photo or cartoon avatar, etc., of the star as the background.

In some embodiments, the shape of the first interface element 310 may also be customized, e.g., assuming that the content of the live stream being previewed is a launch of a certain brand of electronic device, the first interface element 310 may be customized to have a shape with a contour of the electronic device to be posted. In this manner, it can facilitate the differentiated operation of the live stream and can improve the user experience.

Certainly, it should be understood that the various examples described above with respect to the first interface element 310 are merely illustrative and are not intended to limit the scope of protection of the present disclosure. The visual pattern of the first interface element 310 can be customized in any appropriate manner as long as it can reflect differentiation to facilitate differentiated operation of the live stream. The visual patterns of the first interface element 310 that can be customized may include, but are not limited to, a presenting position, a size, a shape, a background color, a background graphic, a text included, and the like of the first interface element 310.

In some embodiments, the first interface element 310 may be included in the media content. For example, a creator of the media content may select to embed the first interface element 310 when editing the media content. In this way, when the media content is presented in the application, the first interface element may be presented at the same time, thereby facilitating live stream reservation. For example, the media content may be presented in a feed recommendation page of the application, and accordingly the first interface element 310 may be displayed.

As mentioned above, the user browsing the page presenting the first interface element 310 may reserve the live stream of the live stream owner by performing a predetermined operation on the first interface element 310. The predetermined operation that triggers the reservation of the live stream may include, but is not limited to, at least one of: clicking on the first interface element 310, sliding or double-clicking on the first interface element 310, and the like. In some embodiments, the predetermined operation triggering the reservation of the live stream may also be related to the live stream content. For example, in some embodiments, assuming that the live stream content is about a brand launch of a particular car, the predetermined operation for triggering a reservation for the live stream may be customized, in addition to the first interface element 310 being customized to have an element such as a car. For example, the predetermined operation may be set to implement the reservation by sliding the vehicle presented in the first interface element 310 to further facilitate the differentiated operation of the live stream and to be able to improve the experience of the user.

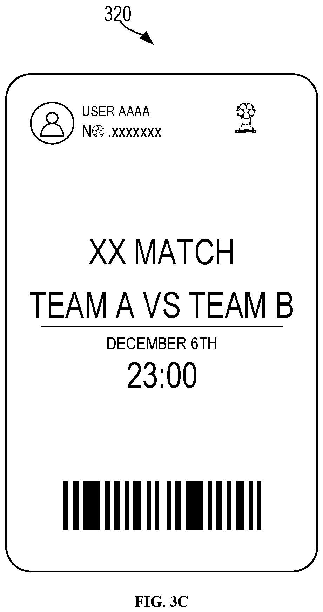

As mentioned above, according to an embodiment of the present disclosure, in response to a predetermined operation for the first interface element 310, a reservation of the live stream may be triggered, and a second interface element 320 may also be triggered at the same time. The second interface element 320 may be shared via the current application. In this way, the live stream reservation and the sharing of the live stream reservation can be implemented in one click. FIG. 3C illustrates an example of the second interface element 320. In the example shown in FIG. 3C, the second interface element 320 may be in the form of a ticket with a predetermined size (second size) that includes second information about the live stream. The second information may be configured as desired. The second information may be the same as or different from the first information. The second information may include at least some or all of the first information. In some embodiments, the second information may include detailed information about the live stream. For example, the second information includes information about the teams involved in the match, the live stream start date and time, and the like. In addition to this, in some embodiments, the second information may include, but is not limited to, information such as a team flag or team logo of the team involved in the live stream.

In some embodiments, similar to the first interface element 310, the visual pattern of the second interface element 320 may also be customized by an initiator of the live stream or the live stream owner. The visual pattern of the second interface element 320 that may be customized may include, but is not limited to, at least one of: a position, a size, a shape, a presenting manner, a background color, a background graphic, text included, and the like, presented by the second interface element 320. In some embodiments, similar to the first interface element 310, the visual pattern of the second interface element 320 may be customized to relate to the content of the live stream. For example, in the case where the live stream being previewed is a large-scale ball match, a logo of the large-scale ball match may be presented in the second interface element 320, and the background of the second interface element 320 may be the team logo or logo color of the team involved in the live stream, for example.

The presenting manner included in the visual pattern mentioned above with respect to the second interface element 320 refers to the manner in which the second interface element 320 is presented on the page. For example, depending on the way the content is live streamed, the presenting manner of the second interface element 320 may include, but is not limited to: sliding in from a particular edge of the display area, gradually appearing, combining blocks, and the like. The customizable visual pattern of the second interface element 320 may further facilitate the differentiated operation of the live stream and may improve the experience of the user.

Certainly, in some embodiments, the at least one visual pattern of the first interface element 310 and/or the second interface element 320 may also be irrelevant to the live stream content. For example, in some embodiments, the provider of the application may pre-set the first interface element 310 and/or the second interface element 320 with a plurality of different visual patterns. The initiator of the live stream or the live stream owner may select one or more of these pre-set plurality of different visual styles of the first interface element 310 and/or the second interface element 320 to present when the live stream is being previewed.

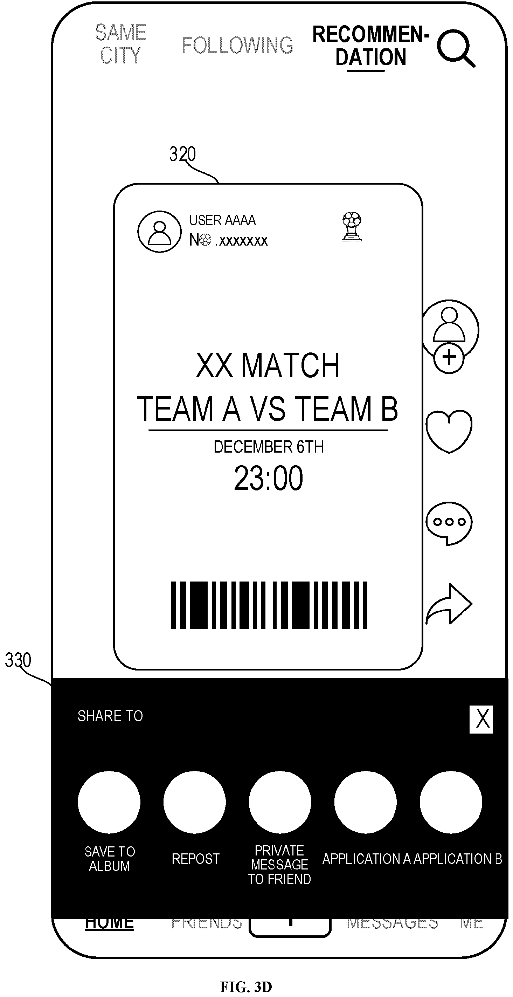

FIG. 3D illustrates an example where the second interface element 320 is presented in a page of an application. In the example shown in FIGS. 3B and 3D, the second size of the second interface element 320 may be greater than the first size of the first interface element 310. The first interface element 310 has a smaller size, which may reduce an occlusion of the media content browsed by the user. The second interface element 320 has a larger size, which facilitates the display of more second information and facilitates the sharing of the user. It should be appreciated that since the first interface element 310 and/or the second interface element 320 are both customizable, they may have any suitable size or form. For example, in some alternative embodiments, the first interface element 310 may also have a size greater than or equal to the second interface element 320.

**In** some embodiments, the initiator or the live stream owner of the live stream may set a plurality of first interface elements 310 or second interface elements 320 of different visual patterns for a preview of a live stream. When presenting to the user, the terminal device 110 may randomly select one pattern of the first interface element 310 or the second interface element 320, thereby further facilitating differentiated operation and experience upgrade of the live stream.

In some embodiments, a visual coding associated with the live stream and being enabled to direct to display a live stream page may also be included in the second interface element 320. The visual coding may include, but is not limited to: a barcode, a QR code, and the like. A barcode is a graphical identification of a plurality of black bars and blanks of varying widths, arranged based on certain coding rules, to express a set of information. Two-dimensional code is also known as two-dimensional barcode, and the common two-dimensional code is QR (Quick Response) code. QR codes may store more information than traditional barcodes and may represent a wider range of data types. Two-dimensional code is a specific geometric figure in the plane (two-dimensional direction) according to a certain law in the distribution of black and white, record data symbols and information graphics. In the code compilation on the clever use of the internal logic of the computer constitutes the basis of the concept of '0', '1' bit stream, using a number of binary corresponding to the geometric form to indicate the text numerical information, through the image input device or photoelectric scanning device to implement the automatic processing of information.

In some embodiments, in addition to the second information about the live stream and the visual coding associated with the live stream that may be included, the second interface element 320 may include information about a current user of the application. The current user is the user who is logged into the application to view the media content therein. As presented in the upper left corner of the second interface element 320 in FIG. 3D, the second interface element 320 may include information such as an avatar and username of the current user.

Certainly, it should be appreciated that the information of the current user presented in the second interface element 320 may not be limited to the username and avatar of the user. In some embodiments, alternatively or in addition, the user information presented in the second interface element 320 may also include some information related to the live stream content. For example, where the content being live streamed is a large-scale soccer event, the information about the current user may also include information about the team that he or she supported during the large-scale soccer event.

In some embodiments, the second interface element 320 may further include a unique identification associated with a reservation for a live stream. The unique identification may depend on an order in which the user reserves the live stream. For example, the unique identification may be a serial or sequential number of the user making the live stream reservation. For example, the first user to make a successful reservation may have the serial number '0001', the second user to make a live stream reservation may have the serial number '0002', and so on. In some alternative embodiments, the unique identification associated with the live stream reservation may also be a unique random number generated by the system when the user makes the reservation. In the second interface element 320, the unique identification may be presented, for example, in the upper left corner or other appropriate location. Since the identification is unique, especially when, for example, the unique identification matches a sequence of numbers for an anniversary or other commemorative significance, it may motivate the user to share the second interface element 320 with other users, thereby facilitating the promotion of the application.

In some embodiments, the manner of sharing the second interface element 320 may include at least one of: local storage, reposting within the application, sharing with a further user within the application, sharing with a further application other than the application . In some embodiments, the second interface element 320 may be shared in any suitable multimedia format such as an image format, a dynamic format, a video format, or the like.

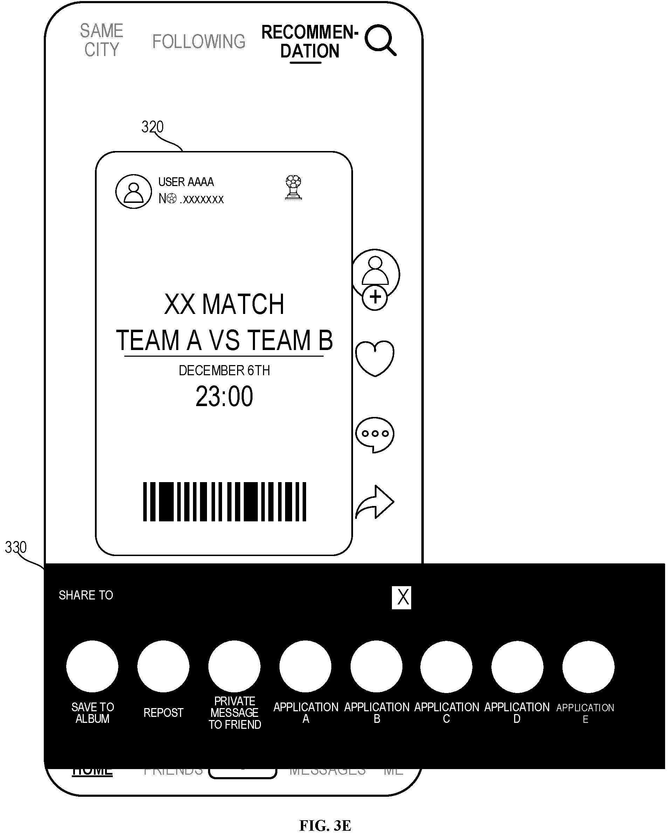

In some embodiments, in order to facilitate sharing the second interface element 320, a possible sharing portal may be presented to the user while presenting the second interface element. As shown in FIG. 3D, while the second interface element is presented, a plurality of sharing interface elements may be presented in a predetermined area (hereinafter referred to as a sharing area 330) of the page. As shown in FIG. 3E, the sharing area 330 may include a plurality of sharing interface elements such as sharing icons. The user may present more sharing interface elements on the page by sliding left and right on the sharing area 330, as shown in FIG. 3E. In response to detecting a trigger for sharing, the terminal device 110 performs sharing of the second interface element. For example, the user may share the second interface element 320 by clicking on the sharing interface element.

For example, in some embodiments, the user may click on the 'save to album' sharing interface element to save the presented second interface element 320 to a local album in the form of an image or a video, which may facilitate further sharing of the live stream content by the user. In some embodiments, alternatively or in addition, the 'save to album' sharing interface element may also be presented on the second interface element 320. In this manner, the user saves the second interface element 320 to the photo album by clicking on the 'save to album' sharing interface element on the second interface element 320.

In some embodiments, after a user saves the second interface element 320 in a local album, that user may send the second interface element 320 in the form of an image to a further user via a further application or may also present the page having the second interface element 320 to a further user to accomplish sharing of the live stream content. The further user may thereby access a page associated with the live stream by way of reading the visual coding in the second interface element 320 using an image input device such as a camera or an opto-electronic scanning device.

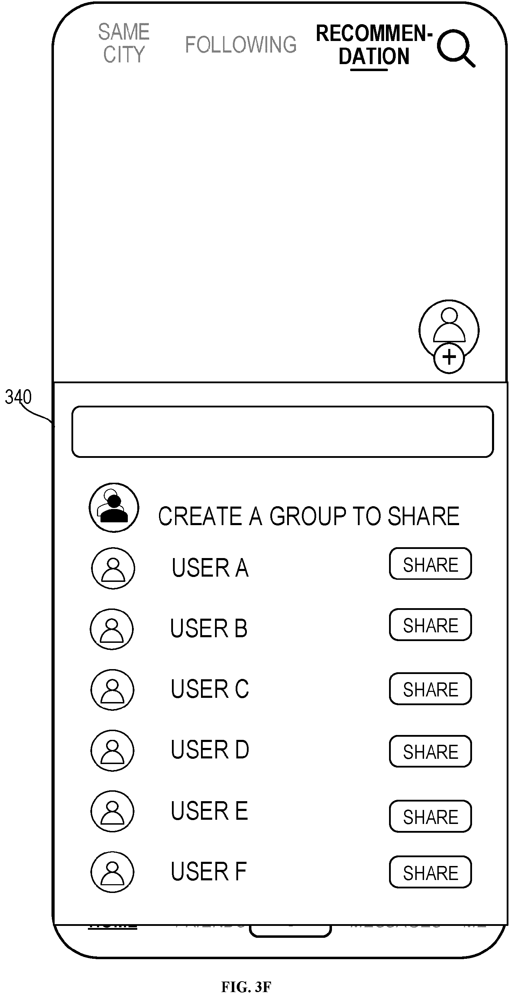

As mentioned above, the sharing of the second interface element 320 may include sharing of a private friend in the application in addition to saving the second interface element 320 to the local album. For example, the user may share the second interface element 320 to a friend within the application by clicking on the 'private friend' icon in FIG. 3E. Specifically, after the user clicks on the 'private message to friend' icon, the terminal device 110 may present a private message friend interface 340 on the page for sending a private message to a friend from the second interface element 320, as shown in FIG. 3F. In the private message friend interface 340, a list of the current friends of the user within the application can be displayed. The list may be sorted in a particular order. In some embodiments, the particular order may be determined by the time of the last contact, the number of messages sent to each other, or an initial order. For example, depending on the number of messages sent to each other, the friends who have sent the most messages may be displayed at the top, and sequentially sorted backward based on the number of messages sent, thereby facilitating sharing by the user to the most frequently contacted friends.

A 'share' icon may be presented at a predetermined location on the private messaging friend interface 340, such as near the username of each friend in the friend list. By clicking on the 'share' icon, the user can share the second interface element 320 with the corresponding friend. Certainly, in some embodiments, the user may also share the second interface element 320 with the friend by directly sending a private message to the username or avatar of the friend in the friend interface 340. In addition, in some embodiments, a 'group sharing' icon may be displayed in the private message friend interface 340. The user can create a group of more than two people by clicking on the 'create a group to share' icon, so as to be able to share to more users at a time. In the following, the idea of the present disclosure will be described mainly in terms of sharing to a friend. It should be understood that the embodiments of group building and sharing are similar and will not be described separately hereinafter.

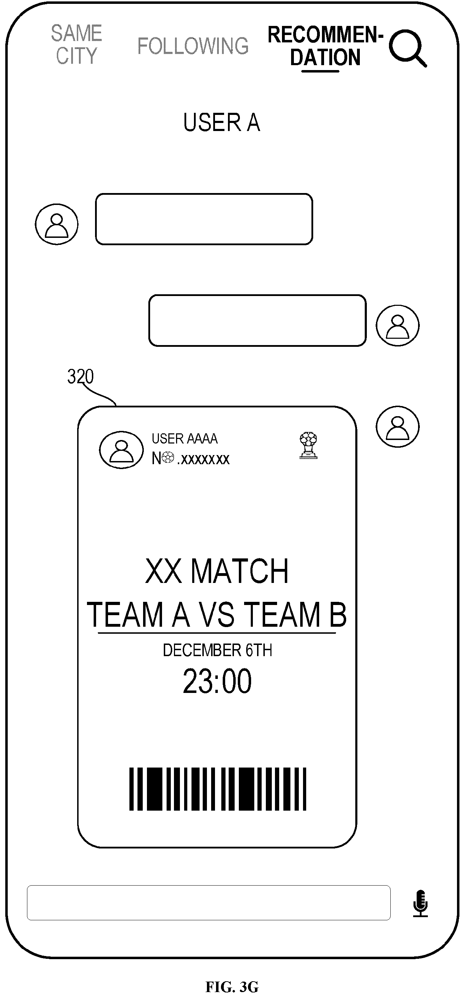

After the user clicks the share button near the friend avatar or the friend, the terminal device 110 then presents an interface for chatting with the corresponding friend as shown in FIG. 3G and sends the second interface element 320 to the friend in the form of an image or any other appropriate multimedia. The friend may access the personal homepage or live stream of the initiator or live stream owner posting the live stream by scanning the visual tags on the second interface element 320 after receiving the sharing of the second interface element 320. In some embodiments, the friend may also enter the personal homepage or live stream of the initiator or live stream owner by clicking on this second interface element 320 or operating a particular button thereon.

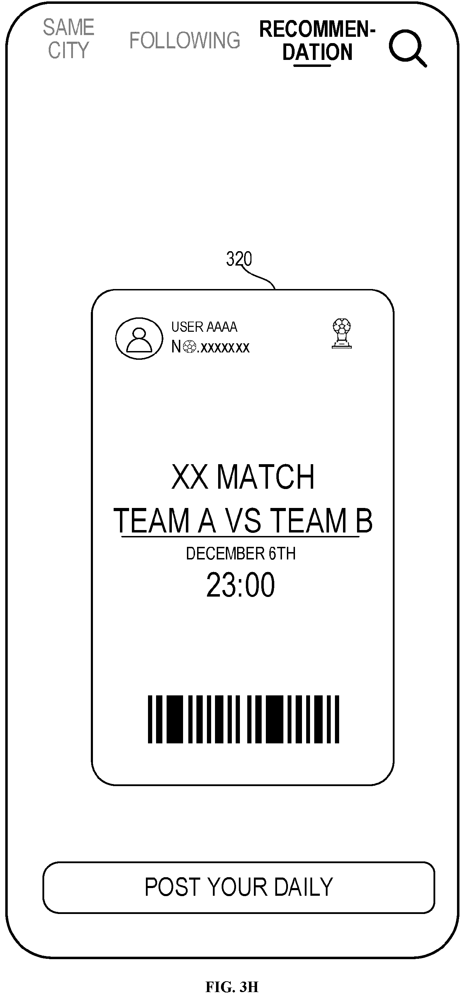

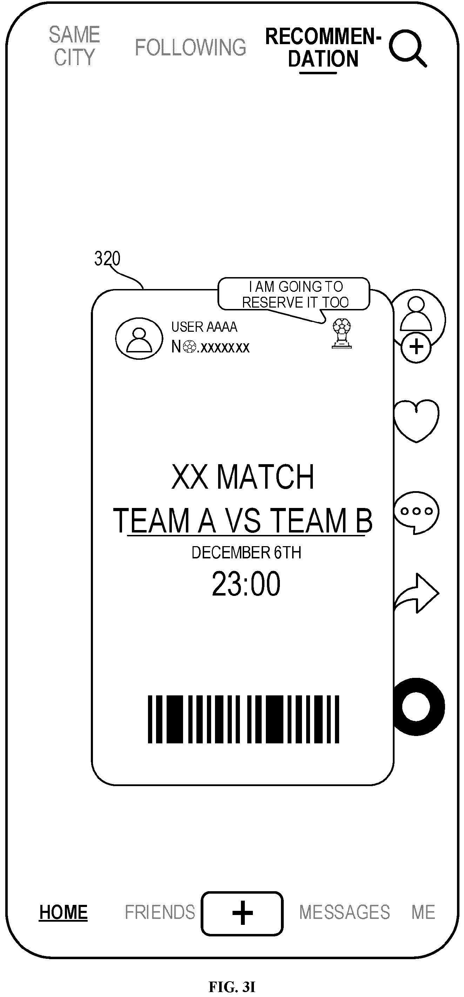

In some embodiments, alternatively or in addition, sharing of the second interface element 320 may also include sharing in the form of in-application reposting. Specifically, after the user clicks on the 'repost' icon in FIG. 3E, an interface for reposting the second interface element 320 is presented, as shown in FIG. 3H. In this interface, the user may edit the multimedia content to be shared including the second interface element 320, e.g., by adding some personalized text, icons or graphics. The user can post it as multimedia content for other users to view by clicking the corresponding button after editing, as shown in FIG. 3I. Other users viewing the multimedia content may access a page related to the live stream, e.g., the homepage or live stream of the initiator who posted the live stream, by scanning the visual tags thereon or by any other appropriate means.

In addition to in-application sharing, sharing of the second interface element 320 may also include sharing from a further application outside of the application. For example, a user may share the second interface element 320 directly to a chat window of a further application, share content, etc. As can be seen from the above description, the user may share the second interface element 320 and the corresponding live stream content in various ways, thereby facilitating the dissemination and promotion of the application.

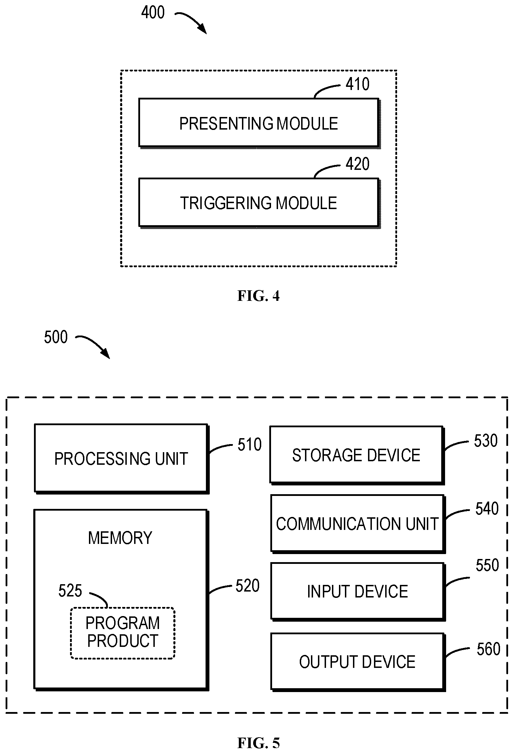

FIG. 4 shows a schematic structural block diagram of an apparatus 400 for content presentation according to some embodiments of the present disclosure. The apparatus 400 may be implemented or included in the terminal device 110. The various modules/components in the apparatus 400 may be implemented by hardware, software, firmware, or any combination thereof.

The apparatus 400 includes a presenting module 410 configured to present a first interface element associated with a reservation of a live stream in an application, the first interface element including at least first information about the live stream. The apparatus 400 further includes a triggering module 420 configured to, in response to receiving a predetermined operation for the first interface element, trigger the reservation for the live stream; and trigger a presentation of a second interface element including at least second information about the live stream, the second interface element being enabled to be shared via the application.

In some embodiments, a visual pattern of at least one of the first interface element and the second interface element is customizable by an initiator of the live stream.

In some embodiments, a visual pattern of at least one of the first interface element and the second interface element is related to a content of the live stream.

In some embodiments, the first information includes summary information about the live stream, the second information including detailed information about the live stream.

In some embodiments, the second interface element further includes at least one of the following: information about a current user of the application, or a unique identification associated with the reservation of the live stream. In some embodiments, the unique identification depends on an order in which the user reserves the live stream.

In some embodiments, the second interface element further includes visual coding associated with the live stream, the visual coding being enabled to direct to a page displayed for the live stream.

In some embodiments, the sharing includes at least one of the following: local storage, reposting within the application, sharing with a further user within the application, sharing with a further application other than the application.

In some embodiments, the first interface element is a sticker with a first size, the second interface element is a ticket with a second size, the second size being greater than the first size.

In some embodiments, the apparatus 400 further includes a sharing performing module configured to, in response to detecting a trigger for the sharing when the second interface element is presented, perform sharing of the second interface element.

In some embodiments, the presenting module 410 is further configured to present a media content in the application, the first interface element being included in the media content.

FIG. 5 illustrates a block diagram of an electronic device 500 in which one or more embodiments of the present disclosure may be implemented. It should be understood that the electronic device 500 illustrated in FIG. 5 is merely for example and should not constitute any limitation on the function and scope of the embodiments described herein. The electronic device 500 illustrated in FIG. 5 may be configured to implement the terminal device 110 of FIG. 1.

As shown in FIG. 5, the electronic device 500 is in a form of a general-purpose electronic device. Components of the electronic device 500 may include, but are not limited to, one or more processors or processing units 510, memory 520, storage device 530, one or more communication units 540, one or more input devices 550, and one or more output devices 560. The processing units 510 may be actual or virtual processors and are capable of performing various processes based on programs stored in the memory 520. In a multiprocessor system, a plurality of processing units perform computer-executable instructions in parallel to increase the parallel processing power of the electronic device 500.

The electronic device 500 typically includes a plurality of computer storage media. Such media may be any obtainable media accessible to the electronic device 500, including, but not limited to, volatile and non-volatile media, removable and non-removable media. The memory 520 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium, such as a flash drive, a disk, or any other medium that may be capable of being configured to store information and/or data (e.g., training data for training) and may be accessible within the electronic device 500.

The electronic device 500 may further include additional removable/non-removable, volatile/non-volatile storage media. Although not shown in FIG. 5, a disk drive for reading from or writing to a removable, non-volatile disk (e.g., a 'floppy disk') and an optical disk drive for reading from or writing to a removable, non-volatile optical disk may be provided. In these embodiments, each drive may be connected to a bus (not shown) by one or more data media interfaces. The memory 520 may include a computer program product 525 having one or more program modules that are configured to perform various methods or actions of various embodiments of the present disclosure.

The communication unit 540 implements communication with other electronic devices via a communication medium. Additionally, the functions of the components of the electronic device 500 may be implemented as a single computing cluster or a plurality of computing machines that are capable of communicating over a communication connection. Thus, the electronic device 500 may use logical connections to one or more other servers, networked personal computers (PCs), or another network node to operate in a networked environment.

The input device 550 may be one or more input devices, such as a mouse, a keyboard, a tracking ball, and the like. The output device 560 may be one or more output devices, such as a monitor, a speaker, a printer, and the like. The electronic device 500 may also communicate, as desired, via the communication unit 540, with one or more external devices (not shown), external devices such as storage devices, display devices, etc., with one or more devices that enable a user to interact with the electronic device 500, or with any device that enables the electronic device 500 to communicate with one or more other electronic devices (e.g., a network card, modem, etc.) to communicate. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, function, and operation of possible implementations of systems, methods, and computer program products according to various implementations of the present disclosure. In this regard, each block in the flowchart or block diagram may represent a module, program segment, or part of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live stream reservation, comprising:
presenting a first interface element associated with a reservation of a live stream in an application, the first interface element comprising at least first information about the live stream; and
in response to receiving a predetermined operation for the first interface element,
triggering the reservation for the live stream; and
triggering a presentation of a second interface element comprising at least second information about the live stream, the second interface element being enabled to be shared via the application.

2. The method of claim 1, wherein a visual pattern of at least one of the first interface element and the second interface element is customizable by an initiator of the live stream.

3. The method of claim 1, wherein a visual pattern of at least one of the first interface element and the second interface element is related to a content of the live stream.

4. The method of claim 1, wherein the first information comprises summary information about the live stream, the second information comprising detailed information about the live stream.

5. The method of claim 1, wherein the second interface element further comprises at least one of the following: information about a current user of the application, or a unique identification associated with the reservation of the live stream.

6. The method of claim 5, wherein the unique identification depends on an order in which the user reserves the live stream.

7. The method of claim 1, wherein the second interface element further comprises visual coding associated with the live stream, the visual coding being enabled to direct to a page displayed for the live stream.

8. The method of claim 1, wherein the sharing comprises at least one of the following:
local storage,
reposting within the application,
sharing with a further user within the application,
sharing with a further application other than the application.

9. The method of claim 1, wherein the first interface element is a sticker with a first size, the second interface element is a ticket with a second size, the second size being greater than the first size.

10. The method of claim 1, wherein presenting the first interface element comprises:
presenting a media content in the application, the first interface element being comprised in the media content.

11. The method of any of claims 1 to 10, further comprising:
in response to detecting a trigger for the sharing when the second interface element is presented, performing sharing of the second interface element.

12. An apparatus for live stream reservation, comprising:
a presenting module configured to present a first interface element associated with a reservation of a live stream in an application, the first interface element comprising at least first information about the live stream; and
a triggering module configured to, in response to receiving a predetermined operation for the first interface element,
trigger the reservation for the live stream; and
trigger a presentation of a second interface element comprising at least second information about the live stream, the second interface element being enabled to be shared via the application.

13. An electronic device comprising:
at least one processing unit; and
at least one memory coupled to the at least one processing unit and storing instructions for execution by the at least one processing unit, the instructions, when executed by the at least one processing unit, causing the device to perform the method of any of claims 1 to 11.

14. A computer readable storage medium having a computer program stored thereon, the computer program, when executed by a processor, implementing the method of any of claims 1 to 11.
